# EUROPÄISCHE PATENTANMELDUNG

(11) **EP 2 932 874 A1**
(43) Veröffentlichungstag der Anmeldung: **21.10.2015**
(21) Anmeldenummer: 14405034.1
(22) Anmeldetag: 15.04.2014
(51) Int. Cl.: A47J 31/36

(54) **Brüheinheit für eine Kaffeemaschine sowie Kaffeemaschine**

(71) Anmelder: JURA ELEKTROAPPARATE AG, 4626 Niederbuchsiten (CH)
(72) Erfinder: Büttiker, Philipp, 4625 Oberbuchsiten (CH); Sahli, Georg, 3423 Ersigen (CH); Ullmann, Erich, 4622 Egerkingen (CH); Probst, Stephan, 4553 Subingen (CH)
(74) Vertreter: EGLI-EUROPEAN PATENT ATTORNEYS

(57) **Zusammenfassung**

Es wird eine Brüheinheit (100) für eine Kaffeemaschine angegeben. Innerhalb der Brüheinheit (100) ist eine in einem verschwenkbaren Brühzylinder (152) angeordnete Brühkammer (150) mittels einer Befülleinrichtung (20) mit gemahlenem Kaffeepulver befüllbar. Die Brühkammer (150) weist zum Einfüllen des Kaffeepulvers eine Befüllöffnung (151) auf. Mit dem Ziel, unerwünschte Ablagerungen von Mahlgut im Bereich der Oberseite der Brüheinheit (100) zu vermeiden und die hygienischen Gegebenheiten zu verbessern, sieht die erfindungsgemäße Lösung vor, dass ein sich nach außerhalb der Brühkammer (150) in Befüllrichtung erstreckender Überstand (110) angeordnet ist, wobei der Überstand (110) derart beschaffen ist, dass der Austrittsbereich (22) der Befülleinrichtung (20) unter Ausbildung eines Zwischenraums (200) zwischen dem Überstand (110) und einer Seitenwand des Austrittsbereichs (22) derart eingeführt ist, dass der Überstand die Austrittsöffnung (25) des Austrittsbereichs (22) im Wesentlichen vollständig umgrenzt.

## Beschreibung

Die vorliegende Erfindung betrifft eine Brüheinheit für eine Kaffeemaschine sowie eine Kaffeemaschine.

Aus der Technik bekannte Kaffeemaschinen weisen eine Vielzahl von Baugruppen auf, welche automatisiert oder automatisierbar derart zusammenwirken, dass ein automatischer Bezug von frisch gebrühten Heißgetränken, in der Regel Kaffeegetränken oder Kaffeemischgetränken, mit minimierter Benutzerinteraktion möglich ist.

Zu diesem Zweck weisen aus dem Stand der Technik bekannte Kaffeemaschinen in der Regel eine sogenannte Brüheinheit auf, welche ihrerseits wiederum eine mit Mahlgut, in der Regel mit gemahlenem Kaffeepulver befüllbare Brühkammer aufweist. Nach dem Einfüllen des Mahlgutes können Teile einer derartigen Brüheinheit derart verschwenkt werden, dass das eingefüllte Mahlgut komprimiert und durch Einleiten von Brühwasser von diesem derart durchsetzt wird, dass ausgangsseitig aus der Brüheinheit das gebrühte Heißgetränk bezogen werden kann. In der Regel erfolgt anschließend ein automatischer Auswurf des Mahlgutkomprimats (Kaffeekuchens) durch Bewegung weiterer Teile der Brüheinheit.

Gängige Kaffeemaschinen zeichnen sich nun darüber hinaus dadurch aus, dass sie ferner ein Mahlwerk aufweisen, welches eingangsseitig mit ungemahlenen gerösteten Kaffeebohnen befüllbar ist, und welches ausgangsseitig für den Bezug eines Kaffeeheißgetränkes der Brüheinheit, genauer gesagt der Brühkammer der Brüheinheit, durch Zermahlen der Kaffeebohnen gewonnenes Mahlgut mit dem gewünschten Mahlgrad und in der gewünschten Menge zuführen kann. Zu diesem Zweck kann beispielsweise ein Brühzylinder, der die Brühkammer aufweist, innerhalb der Brüheinheit zum Durchführen des Befüllvorganges derart schwenkbar sein, dass eine Öffnung der Brühkammer unterhalb des Mahlwerkausgangs angeordnet ist, sodass gemahlenes Kaffeepulver aus dem Mahlwerkausgang durch die Öffnung (im Folgenden "Befüllöffnung") in die Brühkammer der Brüheinheit fallen kann.

Aus der EP 0 559 620 A1 ist beispielsweise eine Brüheinheit für eine Kaffeemaschine bekannt, welche einen schwenkbaren Brühzylinder der vorstehend genannten Art umfasst, wobei der Brühzylinder zum Befüllen der Brühkammer mit Kaffeepulver in eine Lage schwenkbar ist, in welcher die Befüllöffnung der Brüheinheit unterhalb einer Ausgabeöffnung eines Mahltrichters, der zur Aufnahme des mittels eines Mahlwerks erzeugten Mahlguts (Kaffeepulver) dient, angeordnet ist, sodass Mahlgut aus der Ausgabeöffnung des Mahltrichters durch die Befüllöffnung rieseln kann.

Aufgrund elektrostatischer Aufladung des Mahlgutes während des Mahlvorganges sowie aufgrund anderer möglicher störender Effekte zeigt sich nun bei den herkömmlichen Brüheinheiten, beispielsweise bei der Brüheinheit, welche aus der EP 0 559 620 A1 oder der EP 2 229 848 A1 bekannt ist, der unerwünschte Effekt, dass während des Befüllvorganges die einzelnen Pulverkörner des Mahlgutes teilweise nicht durch die Befüllöffnung der Brühkammer in diese hineinrieseln, sondern infolge der elektrostatischen Ladung auf der Oberseite der Brüheinheit verstreut werden. Insbesondere dann, wenn die Brühkammer mit einer großen Pulvermenge, beispielsweise mit dem maximalen Fassungsvermögen an Pulver, befüllt werden soll, ergibt sich eine unerwünschte große Verteilung der einzelnen Pulverkörner auf der Oberseite der Brüheinheit.

Eine derartige Ablagerung der Pulverkörner auf der Oberseite der Brüheinheit führt infolge des warm-feuchten Klimas beim Kaffeebezug an diesen Stellen der Brüheinheit zu hygienischen Problemen.

Der vorliegenden Erfindung liegt daher die Aufgabe zugrunde, eine Brüheinheit für eine Kaffeemaschine anzugeben, bei welcher die hygienischen Verhältnisse verbessert sind.

Die Aufgabe wird gelöst durch eine Brüheinheit gemäß den Merkmalen des unabhängigen Patentanspruches 1.

Insbesondere wird die Aufgabe gelöst durch eine Brüheinheit für eine Kaffeemaschine, wobei die Brüheinheit eine mittels einer Befülleinrichtung mit gemahlenem Kaffeepulver befüllbare Brühkammer aufweist, wobei die Brühkammer eine Befüllöffnung zum Einfüllen des Kaffeepulvers in einer Befüllrichtung aufweist, wobei oberhalb der Befüllöffnung ein sich nach außerhalb der Brühkammer in Befüllrichtung erstreckender Überstand angeordnet ist, wobei der Überstand derart beschaffen ist, dass der Austrittsbereich der Befülleinrichtung unter Ausbildung eines Zwischenraums zwischen dem Überstand und einer Seitenwand des Austrittsbereichs derart eingeführt ist, dass der Überstand die Austrittsöffnung des Austrittsbereichs im Wesentlichen vollständig umgrenzt.

Die Vorteile der erfindungsgemäßen Lösung liegen auf der Hand. Oberhalb der Befüllöffnung der Brühkammer ist also ein Überstand vorgesehen, welcher sich - bei entsprechender Befüll-Schwenkposition des Brühzylinders der Brüheinheit - in die Befüllrichtung erstreckt, d. h. in der Regel in Richtung des Austrittsbereichs eines Mahltrichters, welcher als Befülleinrichtung dient.

Im Unterschied zu den aus dem Stand der Technik bekannten Brüheinheiten ist nun vorgesehen, dass dieser Austrittsbereich der Befülleinrichtung, in der Regel also der Austrittsbereich des Mahltrichters unterhalb des Mahlwerkes, in den Bereich des Überstandes eingeführt ist, und zwar derart, dass ein Zwischenraum zwischen dem sich in Befüllrichtung erstreckenden Überstand und der Seitenwand des Austrittsbereiches ausgebildet wird.

Hierbei ist der Überstand derart ausgestaltet, dass er den Austrittsbereich, d. h. in der Regel das Austrittsende des Mahltrichters, im Wesentlichen vollständig umgrenzt. Hierdurch wird das Ausbilden von Ablagerungen, welche gegebenenfalls ein Hygieneproblem darstellen können, effektiv vermindert oder komplett unterbunden.

Das gegebenenfalls elektrostatisch geladene Mahlgut wird also nach dem Mahlvorgang nicht von der Oberseite der Brüheinheit elektrostatisch angezogen, d. h. vor allem bei größerer Menge von Mahlgut verteilen sich zum Ende des Einfüllvorganges hin die geladenen Pulverkörner nicht unkontrolliert. Vielmehr vermeidet der Überstand weitgehend, dass diese Pulverteilchen auf der Oberseite der Brüheinheit zu liegen kommen. Mit anderen Worten: Sie kollidieren mit dem Überstand und fallen in die Brühkammer zurück.

Wesentlich hierbei ist, dass ein Zwischenraum zwischen dem Überstand und einer Seitenwand des Austrittsbereiches ausgebildet wird. Es hat sich nämlich gezeigt, dass durch das Vorsehen eines derartigen Zwischenraums zwischen dem Überstand und der Seitenwand des Austrittsbereichs die Wirkung der erfindungsgemäßen Brüheinheit dahingehend verbessert werden kann, dass Ablagerungen weiter reduziert werden.

Der Zwischenraum dient hierbei zum einen dazu, beim Einfüllen des Mahlgutes entstehende Verwirbelungen vorteilhaft so zu beeinflussen, dass sich nur wenige oder keine Ablagerungen auf der Oberseite der Brüheinheit bilden. Insbesondere dient der Zwischenraum hierbei auch zum Abführen von Luft während des Einfüllvorganges.

Wenn der Brühzylinder der Brüheinheit nach einem erfolgten Brühvorgang wieder in die Befüllposition geschwenkt wird, so dass die Befüllöffnung der Brühkammer wieder mit dem Überstand fluchtet, müssen außerdem feuchtwarme Dämpfe abgeleitet werden, welche bei einer Stauung ebenfalls zu einer unvorteilhaften Ablagerungsbildung führen können. Daher hat der Zwischenraum des Weiteren die Funktion, diese feuchtwarmen Dämpfe abzuleiten.

Insbesondere bei einer symmetrischen Ausbildung sowohl von Austrittsbereich als auch von Überstand, besonders vorzugsweise bei komplementärer Formgebung dieser Teile, ist der Zwischenraum auf die innere Umfangsfläche des Überstandes bezogen an jeder Stelle in etwa gleich groß. Mit anderen Worten: Im Zwischenraum weist dann der Austrittsbereich vom Überstand einen gleichförmigen Abstand auf.

In einer Ausführungsform der Erfindung ist beispielsweise vorgesehen, dass die Befülleinrichtung mindestens einen Mahltrichter aufweist, an dessen unterem Ende der Austrittsbereich ausgebildet ist. Hierbei weist der Austrittsbereich einen Öffnungsquerschnitt auf, der geringer ist als der Öffnungsquerschnitt des Überstandes, und zwar derart, dass im Zwischenraum der Austrittsbereich vom Überstand einen Abstand zwischen 1 mm und 20 mm aufweist. Diese Bereichsangabe ist hierbei insbesondere derart zu verstehen, dass der Zwischenraum auf die innere Umfangsfläche des Überstandes bezogen an jeder Stelle einen im Wesentlichen einheitlichen Abstand aufweist, wobei dieser Abstand in Abhängigkeit von den jeweiligen Anwendungsbedingungen in einem Bereich zwischen 1 mm und 20 mm liegt. Es hat sich gezeigt, dass innerhalb dieses Bereiches des Abstandes vorteilhafte dahingehende Wirkungen erzielt werden, dass das Bilden von unerwünschten Ablagerungen wirkungsvoll unterbunden wird.

Gemäß einem weiteren Aspekt der Erfindung ist vorgesehen, dass der Überstand integral mit der Brüheinheit ausgebildet ist. Hierdurch ergibt sich der besondere Vorteil, dass durch die damit gewonnene Stabilität der Überstand sehr beständig ist.

Alternativ kann der Überstand jedoch auch abnehmbar von der Brüheinheit ausgebildet sein. Dies bietet sich insbesondere an, um bestehende Brüheinheiten nachträglich mit dem Überstand auszurüsten. Insbesondere ist hierfür an dem Überstand eine Schraub-, Schnapp- oder Klippseinrichtung zum wahlweisen Ausstatten der Brüheinheit mit dem Überstand vorgesehen. Vorzugsweise ist in diesem Fall an der Brüheinheit eine entsprechende komplementäre Schraub-, Schnapp- bzw. Klippseinrichtung vorgesehen. Durch eine derartige Ausgestaltung ist eine besonders gute Flexibilität gegeben.

Gemäß einem weiteren Aspekt der Erfindung ist es vorgesehen, dass der Überstand von einer Wand (im Folgenden auch "Pulverkragen" genannt) gebildet ist, welche sich entlang einer geschlossenen, sich um den Austrittsbereich der Befülleinrichtung verlaufende Kurve erstreckt und eine geschlossene innere Umfangsfläche aufweist. Der Überstand kann beispielsweise zylinderförmig ausgebildet sein und eine geschlossene innere Umfangsfläche aufweisen. In diesem Fall erstreckt sich der Überstand mit im Wesentlichen kreisförmigem Querschnitt von der Befüllöffnung der Brühkammer aus in Befüllrichtung, d. h. in Richtung des Austrittsbereichs der Befülleinrichtung. Durch eine derartige Zylinder- oder Rohrform ist ein besonders einfacher Aufbau gewährleistet. Der Querschnitt des Überstandes bzw. der Querschnitt der inneren Umfangsfläche des Überstandes kann allerdings auch eine beliebige andere (nicht kreisförmige) Form aufweisen.

Die innere Umfangsfläche des Überstandes kann eine Hochglanzoberfläche aufweisen bzw. zumindest bereichsweise als Hochglanzoberfläche ausgebildet sein. In diesem Fall ist die innere Umfangsfläche besonders glatt und hat dadurch den Vorteil, dass eine Anlagerung von Kaffeepulver an der inneren Umfangsfläche weitgehend vermieden wird.

Gemäß einem weiteren Aspekt der Erfindung ist es vorgesehen, dass der Überstand von einer Wand gebildet ist, welche ein oberes Ende aufweist und eine Wandhöhe zwischen 5 mm und 50 mm aufweist. Insbesondere im Zusammenspiel mit dem oben genannten vorteilhaften Bereich des Zwischenraumes bietet ein derartiger Überstand mit einer solchen Wandhöhe besonders zuverlässige Ergebnisse bei der Vermeidung von unerwünschten Ablagerungen.

In diesem Zusammenhang kann es vorgesehen sein, dass die Wandstärke des Pulverkragens zwischen 0.5 mm und 3 mm liegt. Hierdurch ist bei minimalem Materialaufwand eine besonders zuverlässige Wirkung hinsichtlich der Vermeidung von Ablagerungen gegeben.

Um Ablagerungen von Kaffeepulver am oberen Ende des Überstands zu vermeiden bzw. weitestgehend zu reduzieren, ist es vorteilhaft, wenn die Wandstärke der den Überstand bildenden Wand möglichst gering ist. Eine effektive Vermeidung bzw. Reduktion von Ablagerungen von Kaffeepulver am oberen Ende des Überstands wird bereits erreicht, wenn die den Überstand bildende Wand an ihrem oberen Ende - zumindest in einem Wandabschnitt, welcher sich bezüglich des oberen Endes der Wand über eine Höhe von 0.5 mm bis 5 mm erstreckt - eine Wandstärke von 0.5 mm bis 1 mm aufweist.

Auch die Konstruktion des Austrittsbereichs der Befülleinrichtung ist von Einfluss darauf, ob Kaffeepulver beim Einfüllen in die Brühkammer in die Brühkammer fällt oder beispielsweise aufgrund einer elektrostatischen Anziehung zwischen elektrostatisch geladenen Kaffeepulverkörnern und dem Austrittsbereichs der Befülleinrichtung beim Fallen abgelenkt wird und schliesslich ausserhalb der Brühkammer landet. Um zu erreichten, dass das Kaffeepulver möglichst zielgenau in die Brühkammer fällt, ist es vorteilhaft, wenn die Austrittsöffnung für das Kaffeepulver von einer Begrenzungswand begrenzt ist, welche zumindest in der Nähe der Austrittsöffnung eine möglichst geringe Wandstärke aufweist. Dies reduziert den Einfluss einer elektrostatischen Anziehung zwischen elektrostatisch geladenen Kaffeepulverkörnern und dem Austrittsbereichs der Befülleinrichtung erheblich.

In diesem Zusammenhang ist es beispielsweise zweckmässig, wenn der Austrittsbereich der Befülleinrichtung als eine sich entlang der Austrittsöffnung des Austrittsbereichs erstreckende, die Austrittsöffnung des Austrittsbereichs begrenzende Begrenzungswand ausgebildet ist und die Austrittsöffnung des Austrittsbereichs an einem unteren Ende der Begrenzungswand angeordnet ist, wobei diese Begrenzungswand an ihrem unteren Ende - zumindest in einem Wandabschnitt der Begrenzungswand, welcher sich bezüglich des unteren Endes der Begrenzungswand über eine Höhe von 0.5 mm bis 5 mm erstreckt - eine Wandstärke von 0.5 mm bis 1 mm aufweist.

Gemäß einem weiteren Aspekt der Erfindung weist die Befülleinrichtung ferner mindestens eine Führungseinrichtung auf. Diese Führungseinrichtung ist insbesondere als Führungsblech ausgebildet, wobei diese mindestens eine Führungseinrichtung dazu ausgelegt ist, das einzufüllende Kaffeepulver der Befüllöffnung der Brühkammer passiv zuzuleiten. Ein derartiges Führungsblech, welches in vorteilhafter Weise unmittelbar am Mahlwerksausgang befestigt ist, und welches vorzugsweise den Mahlwerkaustrittskanal teilweise oder ganz überdeckt, ist dahingehend vorteilhaft, dass geladene Mahlgutteilchen, d. h. geladene Pulverteilchen und dergleichen, beim Verlassen des Mahlwerksaustrittskanals zusätzlich an diesem Führungsblech, d. h. an dieser Führungseinrichtung abprallen und in Richtung der Brühkammer geleitet werden.

Gemäß einem weiteren Aspekt der Erfindung ist es vorgesehen, dass der Austrittsbereich der Befülleinrichtung mit einer vorab festgelegten Eindringtiefe in den Bereich des Überstandes eingeführt ist. Dabei ist der Austrittsbereich der Befülleinrichtung in einen von der Wand des Überstands umgrenzten inneren Bereich des Überstands mit einer Eindringtiefe eingeführt, welche - bezogen auf das obere Ende der Wand - mindestens 1 mm beträgt und nicht grösser als die Wandhöhe ist. Vorzugsweise beträgt die Eindringtiefe 1 mm bis 20 mm.

Der Ausdruck "Bereich des Überstandes" ist hierbei so zu verstehen, dass bei beispielsweise zylinderförmiger Ausgestaltung des Überstandes dieser Bereich ab der Durchdringung einer gedachten Deckelplatte des Überstandes beginnt, welche auf dem Rand des Überstandes aufliegt. Die Eindringtiefe ist dann derart definiert, dass sie den Abstand zwischen diesem Bereich der gedachten Deckelplatte zur Austrittsöffnung der Befülleinrichtung, d. h. zur Austrittsöffnung des Mahltrichters oder dergleichen angibt.

In einer Kaffeemaschine kann diese Position, in welcher der Austrittsbereich des Mahltrichters um vorzugsweise 1 mm bis 20 mm in den Bereich des Überstandes eingeführt ist, durch die ortsfeste Anordnung der Brüheinheit relativ zum Mahlwerk gewährleistet werden.

Es ist bereits ab einer derart geringen Eindringtiefe mittels der erfindungsgemäßen Lösung möglich, ein Bilden von Ablagerungen beim Befüllen der Brühkammer der Brüheinheit wirkungsvoll zu verringern oder komplett zu vermeiden.

Gemäß einem weiteren Aspekt der Erfindung ist es vorgesehen, eine Kaffeemaschine mit mindestens einem Mahlwerk und mit einer erfindungsgemäßen Brüheinheit zu versehen. Die Brüheinheit weist dann einen verschwenkbar ausgebildeten Brühzylinder auf, innerhalb dessen die Brühkammer ausgebildet ist. Es ist ferner eine Abstreifeinrichtung am Überstand vorgesehen, welche dazu ausgelegt ist, bei der Bewegung des Brühzylinders überschüssiges gemahlenes Kaffeepulver abzustreifen.

Diese zusätzliche Abstreifeinrichtung ist aus einem weichen Material, beispielsweise aus einem Gummimaterial oder Silikon oder dergleichen gebildet. Vorzugsweise ist sie am Überstand vorgesehen, genauer an der unteren Kante des Überstandes, an welcher entlang der Brühzylinder bewegt wird.

Beim Verschwenken des Brühzylinders, beispielsweise beim Verschwenken in die Befüllposition oder aus der Befüllposition in eine Brühposition oder dergleichen dient die Abstreifeinrichtung dann dazu, mögliche Ablagerungen an der oberen Seite des Brühzylinders abzustreifen. Hierdurch kann die Bildung von unerwünschten Ablagerungen weiter reduziert werden.

Bei einer weiteren Ausgestaltung der Kaffeemaschine ist die Bewegung des Brühzylinders eine relativ zum Überstand erfolgende Verschwenkbewegung. Da eine solche Verschwenkbewegung bei gängigen Kaffeemaschinen ohnehin stattfinden muss, um den Brühzylinder zwischen seiner Befüllstellung und den weiteren für den Brühvorgang benötigten Stellungen zu bewegen, erfolgt bei einer derartigen vorteilhaften Ausgestaltung das Abstreifen überschüssigen gemahlenen Kaffeepulvers automatisch und damit auf besonders einfache Weise.

Im Folgenden werden Ausführungsformen der erfindungsgemäßen Lösung anhand einer Zeichnung näher erläutert.

Es zeigen:
- Fig. 1:: eine perspektivische Seitenansicht auf eine Brüheinheit für eine Kaffeemaschine gemäß der ersten Ausführungsform der Erfindung;
- Fig. 2:: eine perspektivische seitliche Draufsicht auf die Brüheinheit aus Fig. 1 in einer Befüllposition relativ zu einem Mahlwerk mit Befülleinrichtung;
- Fig. 3:: eine seitliche Schnittansicht auf einen Ausschnitt der Brüheinheit gegenüber dem Mahlwerk aus Fig. 2;
- Fig. 4:: eine seitliche Schnittansicht der erfindungsgemäßen Brüheinheit gegenüber dem Mahltrichter aus Fig. 2;
- Fig. 5:: eine perspektivische Seitenansicht analog zu Fig. 1 auf die erfindungsgemäße Brüheinheit gemäß einer zweiten Ausführungsform der Erfindung;
- Fig. 6:: eine seitliche Schnittansicht auf eine Brüheinheit relativ zu einem Mahlwerk mit Befülleinrichtung gemäß einer dritten Ausführungsform der Erfindung;
- Fig. 7:: eine Abdeckung der Brühkammer der Brüheinheit gemäss Fig. 4 mit einem integrierten Überstand in einer seitlichen Schnittansicht wie in Fig. 4, jedoch vergrössert, und
- Fig. 8:: den Mahltrichter gemäss Fig. 4 in einer seitlichen Schnittansicht wie in Fig. 4, jedoch vergrössert.

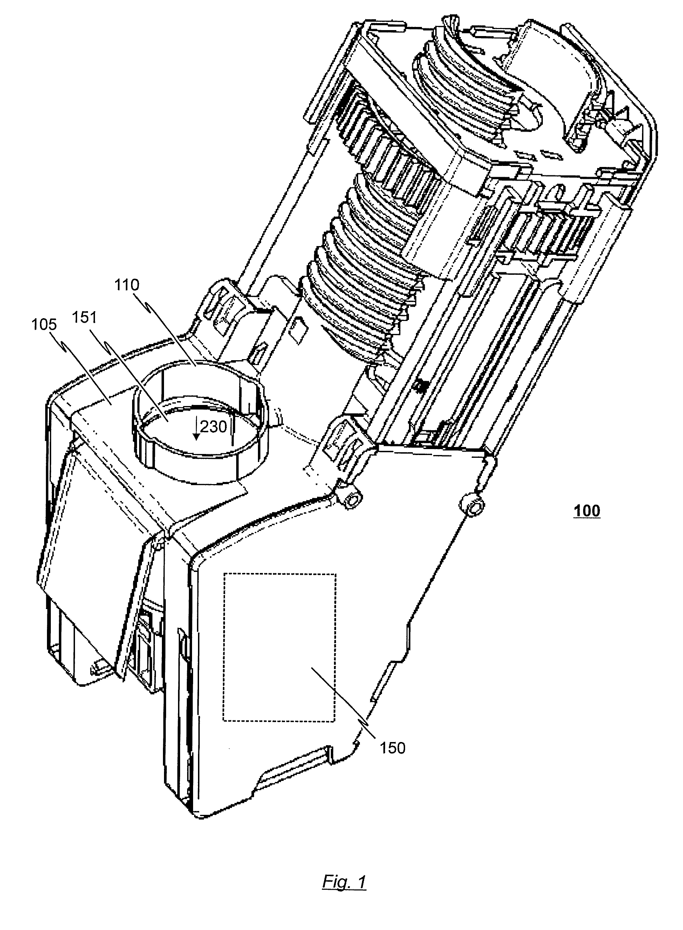

Fig. 1 zeigt eine perspektivische Seitenansicht auf eine erfindungsgemäße Brüheinheit 100 gemäß einer ersten Ausführungsform der Erfindung.

Die Brüheinheit 100 weist hierbei einen von einem Gehäuse umgebenen Brühzylinder mit einer darin ausgebildeten Brühkammer 150 auf, an deren Oberseite eine Befüllöffnung 151 ausgebildet ist. Wie später im Zusammenhang mit den nachfolgenden Figuren noch erläutert wird, ist innerhalb der Brüheinheit der Brühzylinder bei einer entsprechenden Anordnung innerhalb einer Kaffeemaschine gegenüber einem Mahlwerk derart durch Verschwenkbewegungen oder dergleichen positionierbar, dass durch die Befüllöffnung 151 gemahlenes Kaffeepulver zugeführt werden kann. Die in Fig. 1 vom Gehäuse der Brüheinheit verdeckte Brühkammer 150 ist lediglich zur besseren Verdeutlichung mit einer unterbrochenen Linie angedeutet. In der Darstellung gemäss Fig. 1 gibt ein mit dem Bezugszeichen 230 bezeichneter gerader Pfeil eine "Befüllrichtung" der Brühkammer 150 an, d.h. es ist davon auszugehen, dass Mahlgut, welches in der Befüllrichtung 230 durch die Befüllöffnung 151 fällt, die Brühkammer 150 erreicht.

An der Befüllöffnung 151 der Brühkammer 150, genauer gesagt oberhalb davon, ist nun erfindungsgemäß ein Überstand 110 vorgesehen, welcher in der ersten Ausführungsform annähernd zylinderförmig ausgebildet ist, d. h. einen im Wesentlichen kreisförmigen Querschnitt (in einer Ebene senkrecht zur Befüllrichtung 230) aufweist. Wie ersichtlich, ist der Überstand 110 im vorliegenden Beispiel als eine sich entlang einer geschlossenen (im Wesentlichen kreisförmigen) Kurve erstreckende Wand ("Pulverkragen") mit einer geschlossenen inneren Umfangsfläche ausgebildet.

Ausgehend von der Befüllöffnung 151 erstreckt sich dieser Überstand 110 mit im Wesentlichen senkrechter umlaufender Seitenwand von der Befüllöffnung 151 weg. Im vorliegenden Beispiel ist der Überstand 110 an einem Abschnitt 105 eines Gehäuses der Brüheinheit 100 angeordnet, welcher eine obere Abdeckung (im Folgenden "obere Abdeckung 105") der Brühkammer 150 bildet. Wie ersichtlich weist die obere Abdeckung 105 eine mit der Befüllöffnung 151 korrespondierende Öffnung auf, wobei sich der Überstand entlang eines Randes dieser Öffnung erstreckt.

Es sei darauf hingewiesen, dass die Form des Querschnitts des Überstands 110 nicht wesentlich für die vorliegende Erfindung ist. Alternativ wäre es deshalb auch möglich, den Überstand 110 derart auszubilden, dass die Form seines Querschnitts in einer Ebene senkrecht zur Befüllrichtung 230 von der in Fig. 1 dargestellten Form beliebig abweicht.

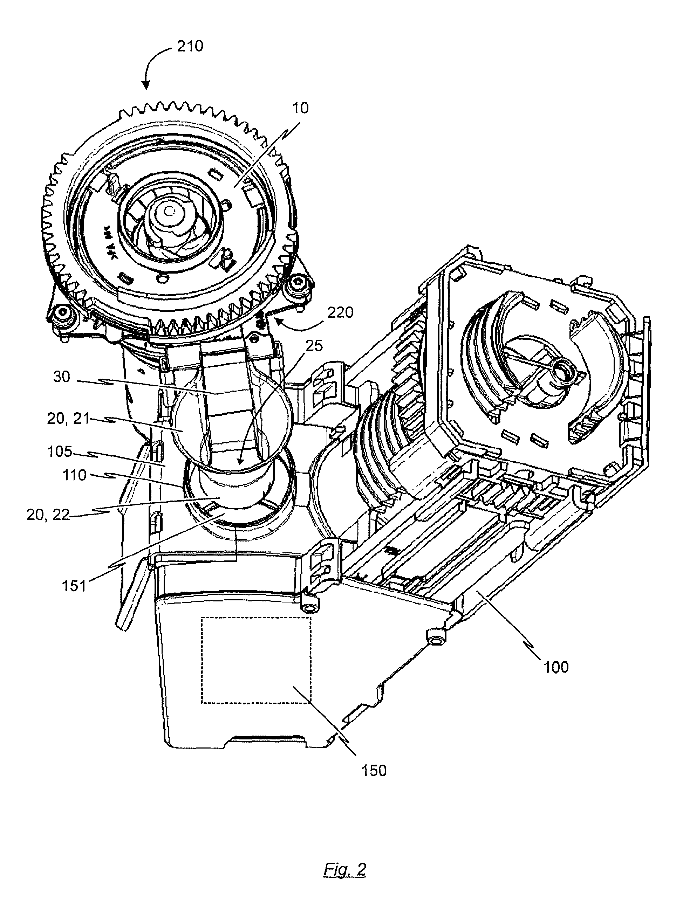

In Fig. 2 ist die Brüheinheit 100 aus Fig. 1 perspektivisch relativ zu einem Mahlwerk 10 in Befüllposition dargestellt. Das Mahlwerk 10 weist eine Zufuhrseite 210 für zu zermahlende geröstete Kaffeebohnen oder dergleichen auf. Weiterhin weist es eine Austrittsseite bzw. Ausgabeseite 220 auf, an welcher ein mit einem Ablenkblech 30 als Führungseinrichtung versehener Mahltrichter 20, der als Befülleinrichtung dient, vorgesehen ist. Der Mahltrichter 20 weist einen konisch zulaufenden Bereich 21 auf, welcher der Ausgabeseite 220 des Mahlwerks 20 zugewandt ist und mit dem Führungsblech 30 versehen ist.

Wie aus der Darstellung in Fig. 2 ersichtlich, verläuft ein Austrittsbereich 22 des Mahltrichters 20 auf die Befüllöffnung 151 der Brühkammer 150 zu, d. h. der Austrittsbereich 22 des Mahltrichters 20 verläuft in Befüllrichtung. Dieser Austrittsbereich 22 mündet in eine Austrittsöffnung 25 des Mahltrichters 20, wobei die Austrittsöffnung 25 mit einem Querschnitt ("Öffnungsquerschnitt") ausgebildet ist, welcher (hinsichtlich seiner Fläche) geringer ist als der Öffnungsquerschnitt des Überstandes 110. Der Öffnungsquerschnitt des Überstandes 110 wiederum ist im Wesentlichen gleich dem Öffnungsquerschnitt der Befüllöffnung 151 der Brühkammer 150 oder kleiner als der Öffnungsquerschnitt der Befüllöffnung 151 der Brühkammer 150.

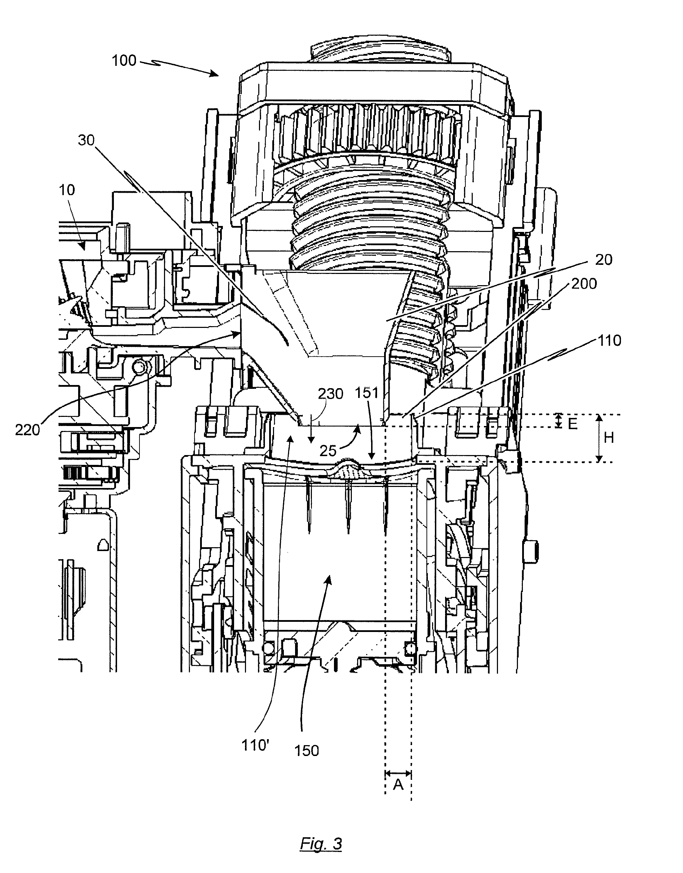

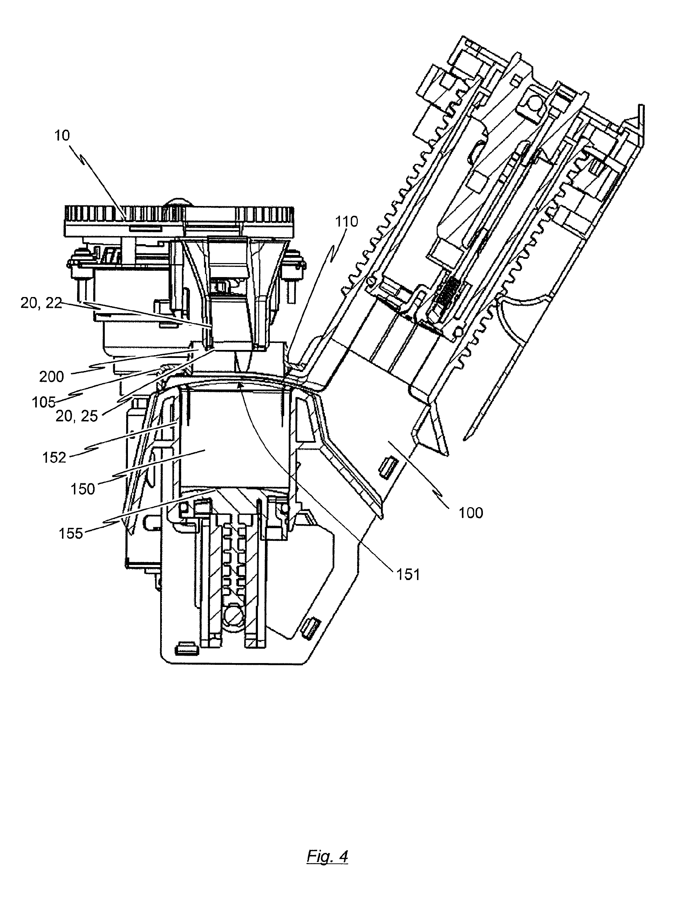

Wie aus den seitlichen Schnittansichten der Fig. 3 und 4 ersichtlich ist, dringt dieser Austrittsbereich 22 des Mahltrichters 20 in den Bereich des Überstandes 110 ein, und zwar derart, dass die Austrittsöffnung 25 des Mahltrichters 20, die diesen Austrittsbereich 22 des Mahltrichters 20 abschließt, von der seitlichen Umfangswand des Überstandes 110 im Wesentlichen vollständig unter Ausbildung eines Zwischenraums 200 umgrenzt wird.

Der Überstand 110 selbst ist als Wand (Pulverkragen) mit einer Wandhöhe H zwischen 5 mm und 50 mm ausgebildet.

Das untere Ende des Austrittsbereichs 22 des Mahltrichters 20, d. h. die Austrittsöffnung 25 des Mahltrichters 20, ist in der Befüllposition in einen von der Wand des Überstands 110 umgrenzten inneren Bereich 110' des Überstands 110 mit einer Eindringtiefe E eingeführt, welche - bezogen auf das obere Ende der Wand - mindestens 1 mm beträgt und nicht grösser als die Wandhöhe H ist. Die Eindringtiefe E beträgt vorzugsweise etwa 1 mm bis 20 mm.

Der Abstand A zwischen der Seitenwand des Austrittsbereichs 22 und der Wand des Überstands 110 ist im vorliegenden Beispiel an jeder Stelle des Umfangs im Wesentlichen gleich und beträgt zwischen 1 mm und 20 mm. Der Abstand A im Zwischenraum sowie die Eindringtiefe E des Austrittsbereichs 22 des Mahltrichters 20 stellen hierbei sicher, dass ein insgesamt großer Luftspalt ausgebildet wird. Dieser Luftspalt ist hinsichtlich seiner Abmessungen so dimensioniert, dass ein Verdrängungs-Luftstrom, welcher beim Einfüllen von Mahlgut in die Brühkammer 150 durch Verdrängen von Luft mittels des aus dem Mahltrichter 20 in die Brühkammer 150 rieselndes Mahlguts in der Brühkammer 150 erzeugt wird, effizient und schnell über den Luftspalt aus der Brüheinheit 100 heraus geführt wird, sodass ein stossweiser Anstieg des Luftdrucks in der Brühkammer 150 weitgehend vermieden werden kann. Letzteres reduziert die Gefahr, dass Mahlgut (Kaffeepulver) die Brühkammer 150 beim Einfüllen des Mahlguts in die Brühkammer 150 verlassen könnte, erheblich, sodass die Bildung von Ablagerungen von Mahlgut ausserhalb der Brühkammer 150 wirkungsvoll verringert wird.

Dieser Verdrängungs-Luftstrom und damit einhergehende Verwirbelungen des Mahlguts treten bei herkömmlichen Brüheinheiten verstärkt auf, wenn die Brühkammer 150 im Brühzylinder 152 mit der maximal möglichen Mahlgutmenge befüllt werden soll. Durch das Vorsehen des Überstandes 110 und dessen besonderen Anordnung und Ausgestaltung, insbesondere durch das Vorsehen des Zwischenraums 200, werden die Verwirbelungen reduziert. Infolgedessen werden auch unerwünschte Ablagerungen auf der Oberseite der Brüheinheit weiter reduziert.

Die jeweiligen vorteilsweise schräg ausgebildeten Kanten sowohl des Austrittsbereichs des Mahltrichters 20, d. h. der Austrittsöffnung 25 des Mahltrichters 20, als auch des Überstandes 110 sind zur Minimierung des elektrostatischen Aufladungseffektes relativ dünn ausgebildet, d. h. mit Wandstärken zwischen 0.5 mm und 3 mm.

Zudem wird der Verdrängungs-Luftstrom gezielt nach oben abgeleitet.

Durch eine derartige Ausgestaltung kann die Wirkung, nämlich dass unerwünschte Ablagerungen minimiert werden, verbessert werden.

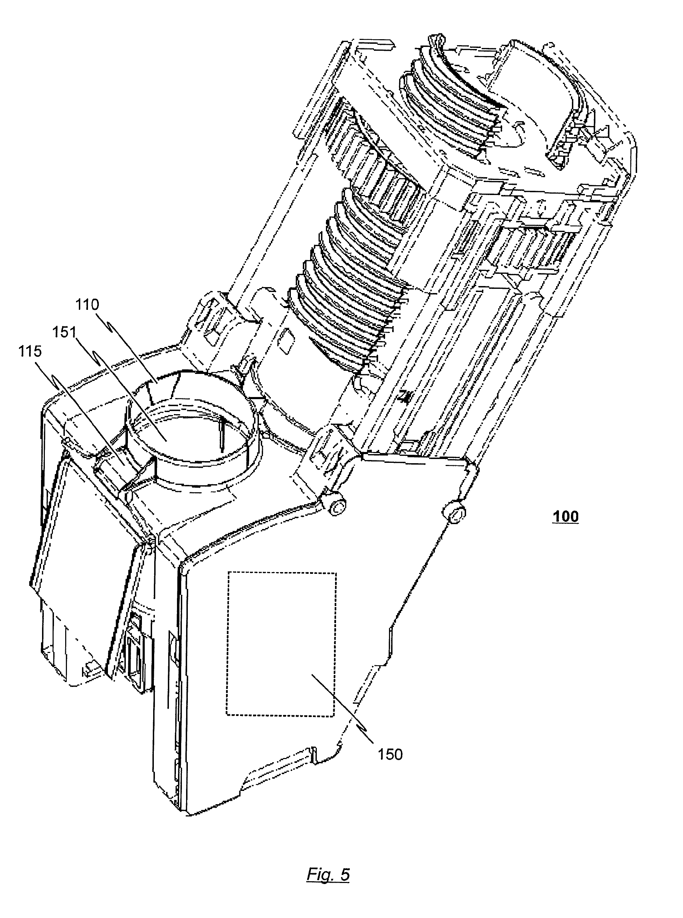

Fig. 5 zeigt eine seitliche perspektivische Ansicht analog zu Fig. 1. Bei dieser in Fig. 5 dargestellten zweiten Ausführungsform der Erfindung ist der Überstand 110 mittels einer Klippseinrichtung 115 abnehmbar an der Brüheinheit 100 befestigt, sodass auch eine vorhandene Brüheinheit nachträglich mit dem Überstand 110 ausgestattet werden kann. Natürlich wäre es auch denkbar, anstelle der Klippseinrichtung 115 andere Befestigungsmittel zu verwenden, um den Überstand 110 abnehmbar an der Brüheinheit 100 zu befestigen, beispielsweise eine Schraubeinrichtung oder eine Schnappeinrichtung.

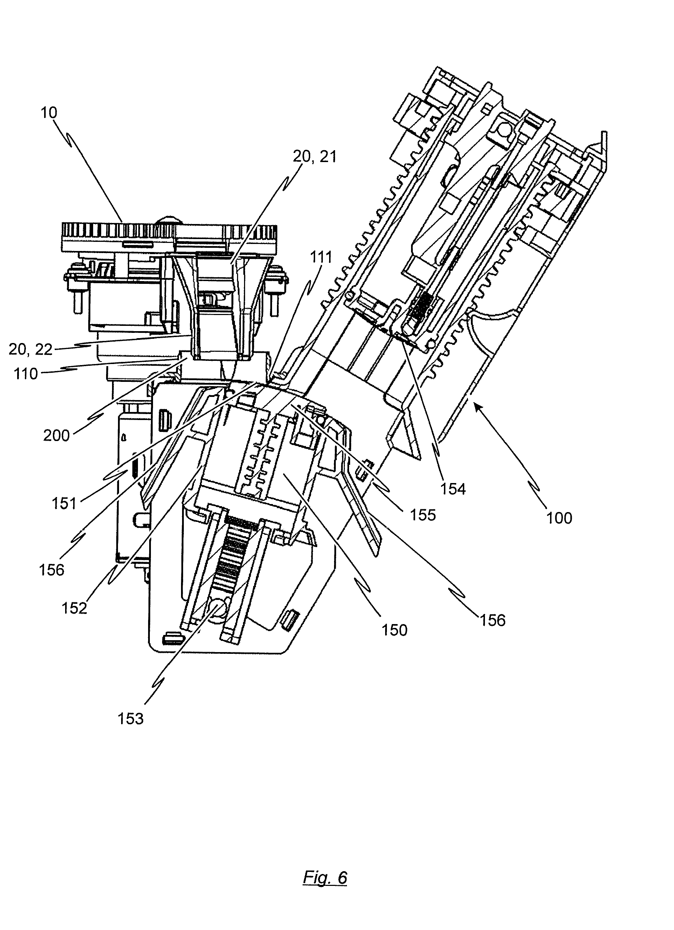

Fig. 6 ist eine seitliche Schnittansicht auf eine Brüheinheit relativ zu einem Mahlwerk mit Befülleinrichtung gemäß einer dritten Ausführungsform der Erfindung.

Innerhalb der dort gezeigten Brüheinheit 100 ist ein um eine Schwenkachse 153 verschwenkbar ausgebildeter Brühzylinder 152 angeordnet, der seinerseits die mit dem Mahlgut befüllbare Brühkammer 150 aufweist. In der in Fig. 6 gezeigten Verschwenkposition befindet sich der Brühzylinder 152 auf halbem Wege zwischen einer Brüh-Verschwenkstellung, in welcher die Befüllöffnung 151 der Brühkammer 150 mit einem Brühkolben 154 fluchten würde, und einer Einfüllstellung, in welcher die Befüllöffnung 151 mit dem wiederum vorgesehenen Überstand 110 und mit dem Austrittsbereich 22 des wiederum vorgesehenen Mahltrichters 20 fluchten würde.

Der in den Figuren dargestellte Brühzylinder 152 weist einen die Brühkammer 150 begrenzenden Boden 155 auf, welcher im Brühzylinder 152 in Richtung der Längsachse des Brühzylinders 152 bewegbar ist. Bei dem in Fig. 6 gezeigten Brühzylinder 152 ist dessen Boden 155 in eine Austreib- oder Auswurfposition gefahren, in welcher verbrauchtes Mahlgut, zu einem Kaffeekuchen gepresst, aus einer in der Nähe des Brühkolbens 154 angeordneten Auswurföffnung der Brüheinheit 100 ausgeworfen werden kann.

Bei der gezeigten Brüheinheit 100 gemäß der dritten Ausführungsform der Erfindung ist der Überstand 110 wie bei der in Fig. 1 dargestellten ersten Ausführungsform integral mit der Brüheinheit 100 ausgebildet. Zusätzlich zur ersten Ausführungsform ist nun am Überstand 110 an dessen unterem Ende eine Abstreifeinrichtung 111 aus einem Elastomer vorgesehen, welche bei einer Verschwenkbewegung des Brühzylinders 152 um die Schwenkachse 153 und damit einer Verschwenkbewegung der Befüllöffnung 151 der Brühkammer 150 gegenüber dem Überstand 110 überschüssiges Kaffeepulver am oberen Rand des Brühzylinders 152 oder am Boden 155 abstreift und so unerwünschte Mahlgutablagerungen weiter verringert. Das von der Abstreifeinrichtung 111 abgestreifte Kaffeepulver kann an einer ausserhalb der Brühkammer 150 angeordneten Ableitrutsche 156, welche beispielsweise am Brühzylinder 152 befestigt sein kann, nach unten fallen und sich gegebenenfalls in einem unterhalb des Brühzylinders 152 angeordneten Sammelbehälter oder in einer Auffangschale (in den Figuren nicht dargestellt) sammeln.

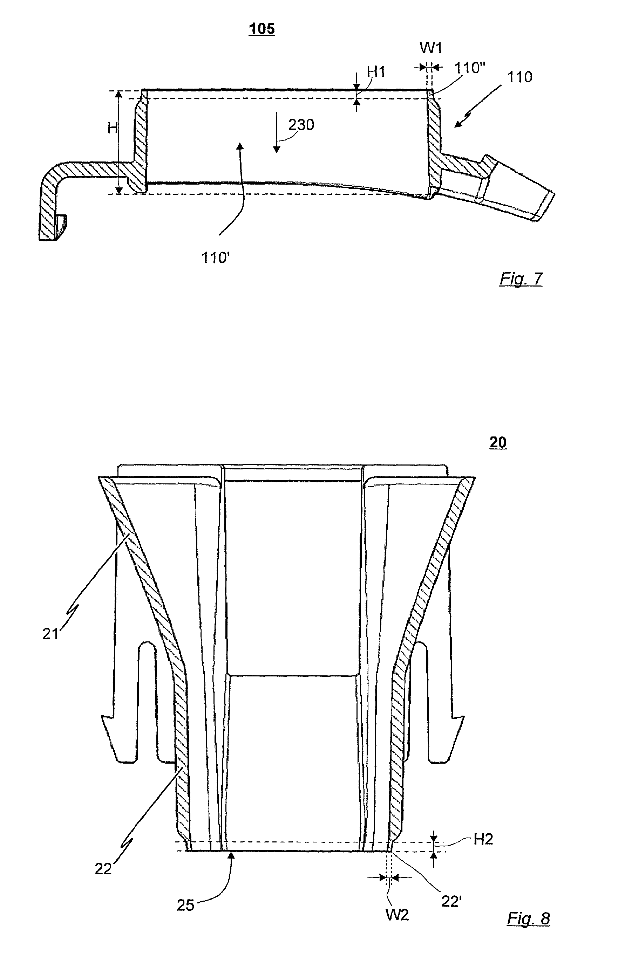

Fig. 7 zeigt eine weitere Ausführungsform eines Überstands 110, bei welcher der Überstand 110 aus einer Wand gebildet ist, deren Wandstärke entlang der Befüllrichtung 230 variiert ist. Im Falle der Fig. 7 ist der Überstand 110 in die obere Abdeckung 105 der Brühkammer 150 der Brüheinheit 100 integriert, wie in der Ausführungsform gemäss Fig. 4. Der Überstand 110 bzw. die obere Abdeckung 105 ist im vorliegenden Fall in einer seitlichen Schnittansicht dargestellt (wie in Fig. 4). Im vorliegenden Beispiel ist der Überstand 110 aus einer Wand gebildet, deren Wandstärke zum oberen Ende hin verjüngt ist, sodass die Wand am oberen Ende des Überstands 110 möglichst dünn ist. Auf diese Weise wird gewährleistet, dass der Überstand 110 als Ganzes einerseits eine hohe mechanische Stabilität aufweist kann und andererseits (wegen seiner geringen Wandstärke am oberen Ende des Überstands 110) der Einfluss elektrostatischer Aufladungseffekte auf Kaffeepulver am oberen Ende des Überstands 110 drastisch reduziert ist. Um den Einfluss elektrostatischer Aufladungseffekte auf Kaffeepulver deutlich zu reduzieren, ist es beispielsweise zweckmässig, dass die den Überstand 110 bildende Wand an ihrem oberen Ende - zumindest in einem Wandabschnitt 110", welcher sich bezüglich des oberen Endes der Wand über eine Höhe H1 von 0.5 mm bis 5 mm erstreckt - eine Wandstärke W1 von 0.5 mm bis 1 mm aufweist (wie in Fig. 7 angedeutet).

Fig. 8 zeigt eine weitere Ausführungsform eines als Befülleinrichtung dienenden Mahltrichters 20, dessen Austrittsbereich 22 als eine sich entlang der Austrittsöffnung 25 des Austrittsbereichs 22 erstreckende, die Austrittsöffnung 25 begrenzende Begrenzungswand ausgebildet ist, wobei die Austrittsöffnung 25 an einem unteren Ende der Begrenzungswand angeordnet ist. Im Falle der Ausführungsform gemäss Fig. 8 ist die Wandstärke der Begrenzungswand in Richtung auf die Austrittsöffnung 25 verjüngt, sodass die Begrenzungswand am unteren Ende des Austrittsbereichs 22 bzw. an der Austrittsöffnung 25 möglichst dünn ist. Der Mahltrichter 20 ist im vorliegenden Fall in einer seitlichen Schnittansicht dargestellt (wie in Fig. 4). Auf diese Weise wird gewährleistet, dass der Mahltrichter 20 als Ganzes einerseits eine hohe mechanische Stabilität aufweist kann und andererseits (wegen seiner geringen Wandstärke am unteren Ende des Austrittsbereichs 22 bzw. an der Austrittsöffnung 25) der Einfluss elektrostatischer Aufladungseffekte auf Kaffeepulver am unteren Ende des Austrittsbereichs 22 bzw. an der Austrittsöffnung 25 drastisch reduziert ist. Um den Einfluss elektrostatischer Aufladungseffekte auf Kaffeepulver deutlich zu reduzieren, ist es beispielsweise zweckmässig, die Begrenzungswand des Austrittsbereichs 22 an ihrem unteren Ende - zumindest in einem Wandabschnitt 22' der Begrenzungswand, welcher sich bezüglich des unteren Endes der Begrenzungswand über eine Höhe H2 von 0.5 mm bis 5 mm erstreckt - eine Wandstärke W2 von 0.5 mm bis 1 mm aufweist (wie in Fig. 8 dargestellt).

## Patentansprüche

1. Brüheinheit (100) für eine Kaffeemaschine, wobei die Brüheinheit (100) eine mittels einer Befülleinrichtung (20) mit gemahlenem Kaffeepulver befüllbare Brühkammer (150) aufweist, wobei die Brühkammer (150) eine Befüllöffnung (151) zum Einfüllen des Kaffeepulvers in einer Befüllrichtung (230) aufweist, wobei oberhalb der Befüllöffnung (151) ein sich nach außerhalb der Brühkammer (150) in Befüllrichtung (230) erstreckender Überstand (110) angeordnet ist, wobei der Überstand (110) derart beschaffen ist, dass der Austrittsbereich (22) der Befülleinrichtung (20) unter Ausbildung eines Zwischenraums (200) zwischen dem Überstand (110) und einer Seitenwand des Austrittsbereichs (22) derart eingeführt ist, dass der Überstand (110) die Austrittsöffnung (25) des Austrittsbereichs (22) im Wesentlichen vollständig umgrenzt.

2. Brüheinheit (100) nach Anspruch 1, wobei die Befülleinrichtung (20) mindestens einen Mahltrichter aufweist, an dessen unterem Ende der Austrittsbereich (22) ausgebildet ist, wobei der Austrittsbereich (22) einen Öffnungsquerschnitt aufweist, der derart geringer ist als der Öffnungsquerschnitt des Überstandes (110), dass im Zwischenraum (200) der Austrittsbereich (22) vom Überstand (110) einen Abstand (A) zwischen 1 mm und 20 mm aufweist.

3. Brüheinheit (100) nach Anspruch 1 oder 2, wobei der Überstand (110) integral mit der Brüheinheit (100) ausgebildet ist.

4. Brüheinheit (100) nach Anspruch 1 oder 2, wobei der Überstand (110) abnehmbar von der Brüheinheit (100) ausgebildet ist und insbesondere mit einer Schraub-, Schnapp- oder Klippseinrichtung (115) zum wahlweisen Ausstatten der Brüheinheit (100) versehen ist, wobei vorzugsweise an der Brüheinheit (100) eine entsprechende komplementäre Schraub-, Schnapp- bzw. Klippseinrichtung vorgesehen ist.

5. Brüheinheit (100) nach einem der vorhergehenden Ansprüche, wobei der Überstand (110) von einer Wand gebildet ist, welche sich entlang einer geschlossenen, sich um den Austrittsbereich (22) der Befülleinrichtung (20) erstreckende Kurve erstreckt und eine geschlossene innere Umfangsfläche aufweist.

6. Brüheinheit (100) nach Anspruch 5, wobei die innere Umfangsfläche eine Hochglanzoberfläche aufweist.

7. Brüheinheit (100) nach einem der Ansprüche 5 oder 6, wobei die Wand ein oberes Ende aufweist und eine Wandhöhe (H) zwischen 5 mm und 50 mm hat.

8. Brüheinheit (100) nach Anspruch 7, wobei der Austrittsbereich (22) der Befülleinrichtung (20) in einen von der Wand umgrenzten inneren Bereich (110') des Überstands (110) mit einer Eindringtiefe (E) eingeführt ist, welche - bezogen auf das obere Ende der Wand - mindestens 1 mm beträgt und nicht grösser als die Wandhöhe (H) ist.

9. Brüheinheit (100) nach Anspruch 7 oder 8, wobei die den Überstand (110) bildende Wand an ihrem oberen Ende - zumindest in einem Wandabschnitt (110"), welcher sich bezüglich des oberen Endes der Wand über eine Höhe (H1) von 0.5 mm bis 5 mm erstreckt - eine Wandstärke (W1) von 0.5 mm bis 1 mm aufweist.

10. Brüheinheit nach einem der vorhergehenden Ansprüche, wobei der Austrittsbereich (22) der Befülleinrichtung (20) als eine sich entlang der Austrittsöffnung (25) des Austrittsbereichs (22) erstreckende, die Austrittsöffnung (25) des Austrittsbereichs (22) begrenzende Begrenzungswand ausgebildet ist und die Austrittsöffnung (25) des Austrittsbereichs (22) an einem unteren Ende der Begrenzungswand angeordnet ist, wobei diese Begrenzungswand an ihrem unteren Ende - zumindest in einem Wandabschnitt (22') der Begrenzungswand, welcher sich bezüglich des unteren Endes der Begrenzungswand über eine Höhe (H2) von 0.5 mm bis 5 mm erstreckt - eine Wandstärke (W2) von 0.5 mm bis 1 mm aufweist.

11. Brüheinheit (100) nach einem der vorhergehenden Ansprüche, wobei die Befülleinrichtung (20) ferner mindestens eine Führungseinrichtung (30), insbesondere ein Führungsblech, aufweist, wobei die mindestens eine Führungseinrichtung (30) dazu ausgelegt ist, das einzufüllende Kaffeepulver der Befüllöffnung (151) der Brühkammer (150) passiv zuzuleiten.

12. Kaffeemaschine mit mindestens einem Mahlwerk (10) und mit einer Brüheinheit (100) nach einem der vorhergehenden Ansprüche, wobei die Brüheinheit (100) einen Brühzylinder (152) aufweist, in welchem die Brühkammer (150) ausgebildet ist, wobei der Brühzylinder (152) gegenüber dem Überstand (110) beweglich ausgebildet ist, wobei eine Abstreifeinrichtung (111) vorgesehen ist, welche vorzugsweise am Überstand (110) vorgesehen ist, und welche dazu ausgelegt ist, bei der Bewegung des Brühzylinders (152) überschüssiges gemahlenes Kaffeepulver abzustreifen.

13. Kaffeemaschine nach Anspruch 12, wobei die Bewegung des Brühzylinders (152) eine Verschwenkbewegung innerhalb der Brüheinheit (100) ist.

14. Kaffeemaschine nach Anspruch 12 oder 13, wobei ausserhalb der Brühkammer (150) eine Ableitrutsche (156) angeordnet ist, welche dazu ausgelegt ist, mittels der Abstreifeinrichtung (111) abgestreiftes Kaffeepulver in einen Sammelbehälter oder eine Auffangschale zu leiten.
